# EUROPÄISCHE PATENTSCHRIFT

(11) **EP 0 784 443 B1**
(45) Veröffentlichungstag und Bekanntmachung des Hinweises auf die Patenterteilung: **08.12.1999**
(21) Anmeldenummer: 95931967.4
(22) Anmeldetag: 01.09.1995
(51) Int. Cl.: A46B 5/00

(54) **ZAHNBÜRSTE**
TOOTHBRUSH
BROSSE A DENTS

(30) Priorität: 07.10.1994 DE 4435888
(43) Veröffentlichungstag der Anmeldung: 23.07.1997
(73) Patentinhaber: CORONET-Werke Gesellschaft mit beschränkter Haftung, 69483 Wald-Michelbach (DE)
(72) Erfinder: WEIHRAUCH, Georg, D-69483 Wald-Michelbach (DE)
(74) Vertreter: Lichti, Heiner, Dipl.-Ing.
(86) Internationale Anmeldenummer: EP9503442
(87) Internationale Veröffentlichungsnummer: WO9610934

(56) Entgegenhaltungen:
- DE-C- 3 840 136
- DE-C- 3 923 495
- DE-U- 9 310 112

## Beschreibung

Die Erfindung betrifft eine Zahnbürste mit einem einstückig aus Kunststoff gespritzten Bürstenkörper, bestehend aus einem im wesentlichen starren, die Borsten aufnehmenden Kopf, einem im wesentlichen starren Stiel und einem diese verbindenden verjüngten Hals, der einen federnden Bereich aus Kunststoff aufweist.

Zahnbürsten dienen vornehmlich zur Reinigung der Zähne und der Interdentalräume, sollen vielfach aber auch eine Massagewirkung auf die Gingiva bzw. deren Randbereiche ausüben. Gerade diese weitere Wirkung hat zu besonderen konstruktiven Maßnahmen an Zahnbürsten geführt. Hierzu zählt insbesondere die Ausbildung einer federnden Verbindung zwischen Bürstenkopf und Stiel, da letztere aus Stabilitätsgründen aus einem vergleichsweise starren Kunststoff, in der Regel durch Spritzgießen, hergestellt sind.

Es sind verschiedene Ausführungsformen zur Erzielung einer federnden Verbindung zwischen Bürstenkopf und Stiel bekannt. Gemäß der FR 1 247 433 ist der Kopf bis in den Stielbereich in Längsrichtung "gespalten" und die leistenförmigen, jeweils gesondert mit Borsten besetzten Teile von einem Klemmring übergriffen, mittels dessen die freie Länge der Leisten und damit die Nachgiebigkeit dieses gegenüber dem Stiel elastischeren Bereichs eingestellt werden kann. Diese Ausführung ist konstruktiv und gebrauchstechnisch aufwendig. Sie ist wegen der vorhandenen Spalte in hygienischer Hinsicht bedenklich. Ähnliches gilt für eine andere Ausführung (US 4 520 526), bei der die Zahnbürste im Übergangsbereich zwischen Kopf und Stiel durch Ausnehmungen im Kunststoff geschwächt ist, um diesem Bereich ein größeres Federvermögen zu verleihen. Auch hier können sich Schmutz, Zahnpflegemittelreste, Bakterien etc. einnisten. Ähnliches gilt für Ausführungen, bei denen im Übergangsbereich starke Profilierungen vorgesehen sind (EP 0 281 017, WO 93/15 627).

Es ist deshalb in hygienischer Hinsicht denjenigen Ausführungen der Vorzug zu geben, bei denen der Übergang zwischen Bürstenkopf und Stiel im wesentlichen glattwandig ist, gleichwohl eine Federwirkung verwirklicht ist. So ist es bekannt (DE 38 40 136) im Übergangsbereich von Stiel und Bürstenkopf eine Blattfeder aus Metall einzulegen und diese vollständig in dem Kunststoff einzubetten. Mit der Blattfeder, die einen höheren Elastiztitätsmodul als der sie umgebende Kunststoff aufweist, ist ein Zurückweichen der Zahnbürste bei zu starkem Andruck, andererseits ein stets ausreichender Andruck bei ordnungsgemäßer Führung der Zahnbürste gewährleistet.

Auch wenn diese Ausführungsform mit metallischer Blattfeder in gebrauchstechnischer Hinsicht weitgehend befriedigt, hat sie doch eine Reihe von Nachteilen. Zum einen ergibt sich herstellungstechnisch das Problem, daß die Blattfeder in den Kunststoff eingespritzt werden muß, was entsprechende konstruktive Vorkehrungen an der Spritzgießform erzwingt. Zum anderen sind Blattfedern aufgrund ihrer extrem dünnen Wandstärke im Fertigungsablauf sowohl manuell, als auch mit Manipulatoren schlecht zu handhaben und in der Spritzgießmaschine nur mit Schwierigkeiten zu positionieren. Auch gehen sie keinerlei Verbindung mit dem sie umhüllenden Kunststoff ein. Dadurch wirken beim Ausfedern im Bereich der Ränder der Blattfeder zwangsläufig Druck- und Scherspannungen auf den umgebenden Kunststoff ein, die zum Bruch führen können oder muß der Querschnitt im Übergangsbereich vom Bürstenkopf zum Stiel überdimensioniert werden. Gerade dort ist aber eine besonders schlanke Form erwünscht, um die Zahnbürste auch bei geschlossenem Mund in den notwendigen Bewegungen führen zu können. Schließlich sind alle metallischen Werkstoffe im Bereich der Mundhygiene unerwünscht, auch wenn sie im vorliegenden Fall nicht freiliegen. Sie stellen ferner beim Recycling von Zahnbürsten, dem aufgrund des Massenverbrauchs dieser Zahnpflegegeräte erhebliche Bedeutung zukommt, ein kaum lösbares Problem dar. Eine sortenreine Trennung der Werkstoffe würde eine vollständige Zerkleinerung der Zahnbürste erforderlich machen. Die Kosten hierfür sind angesichts des geringen Massenanteils des Metalls kaum vertretbar.

Schließlich ist schon vorgeschlagen worden (WO 93/15 627, DE 38 40 136), den Bürstenkörper im Bereich des Halses extrem schlank auszubilden und auf diese Weise eine Federwirkung zu erzielen. Der sehr dünne Querschnitt wird dann mit einem gummielastischen Elastomer umspritzt. Die üblicherweise für den Bürstenkörper verwendeten Kunststoffe weisen einen zu niedrigen Elastizitätsmodul auf, um eine ausreichende und vor allem dauherhafte Federwirkung zu erzielen. Ferner müssen die Übergänge vom Stiel bzw. Kopf extrem steil sein, so daß es an den Übergängen leicht zum Bruch kommt. Will man einen ausreichend hohen Elastizitätsmodul vorsehen, müßten sehr hochwertige Kunststoffe für den Bürstenkörper verwendet werden. Dies ist bei einem Massenartikel, wie Zahnbürsten, kostenmäßig nicht vertretbar.

Ähnliches gilt für eine bekannte Zahnbürste (DE 39 23 495), die der Erfindung am nächsten kommt und bei der der einstückige Bürstenkörper aus zähhartem Kunststoff besteht und vornehmlich im Bereich des Übergangs zwischen Hals und Stiel durch Aussparungen geschwächt ist, um einen federnden Bereich zu erhalten. Die Aussparungen sind mit einem gummielastischen Elastomer umspritzt, das beim Ausfedern des Halses als Dämpfer wirkt. Auch hier sind die querschnittsgeschwächten Bereiche bruchgefährdet, zumal nur sie die Biegebeanspruchungen zumindest auf dem größten Teil des Auslenkweges des Halses aufnehmen müssen.

Der Erfindung liegt die Aufgabe zugrunde, eine Zahnbürste vorzuschlagen, die fertigungstechnisch einfach, gebrauchstechnisch günstig und im übrigen umweltfreundlich gestaltet ist. Ferner soll die Federwirkung leicht einstellbar sein.

Diese Aufgabe wird erfindungsgemäß dadurch gelöst, daß der federnde Bereich als Federteil ausgebildet ist, das zumindest überwiegend aus einem höherwertigen Kunststoff mit einem höheren Elastizitätsmodul als der Bürstenkörper besteht und in dem Kunststoff des Bürstenkörpers unter Bildung des Halses zumindest teilweise eingebettet ist. Stattdessen kann gemäß Anspruch 2 das Federteil auch den Bürstenkörper im Halsbereich zumindest teilweise umhüllen.

Mit der Erfindung wird zunächst der Vorteil erreicht, daß die Zahnbürste zur Gänze aus Kunststoff besteht und infolgedessen ohne jegliche Probleme entsorgt werden kann. Ferner wird jeglicher Metallanteil, der im mundhygienischen Bereich unerwünscht ist, vermieden. Schließlich läßt sich eine solche Zahnbürste kostengünstig herstellen, z.B. im Zweikomponenten-Spritzgießverfahren, im Einbettverfahren oder dergleichen. Da das Kunststoff-Federteil in Kunststoff eingebettet ist, liegt keine artfremde Werkstoffpaarung vor und es kann je nach Art der Kunststoffe sogar eine stoffschlüssige Verbindung entstehen. Nur das Federteil muß aus einem hochwertigem Kunststoff bestehen, während der Bürstenkörüer aus herkömmlichen preiswerten Kunststoffen bestehen kann.

Das Federteil kann ausschließlich aus reinem oder einem gefüllten Kunststoff bestehen, wobei die Füllstoffe mit einem Anteil von 1 bis 30 Vol.-% vorgesehen sein können.

Vorzugsweise besteht das Federteil aus einem faserverstärkten Kunststoff, wobei vorzugsweise Glasfasern eingesetzt werden. Ein solches Federteil kann gesondert gespritzt und anschließend in die Spritzgießform der Zahnbürste eingelegt oder integriert gespritzt werden. Das Federteil kann aber auch durch Umspritzen des Halsbereichs des Bürstenkörpers erzeugt werden.

Das Federteil kann einen flachen, polygonalen, runden oder ovalen Querschnitt aber auch einen U-, T- oder I-Querschnitt aufweisen, um auf diese Weise die Art der Ausfederung des Bürstenkopfs zu beeinflussen. Diese Ausfederung kann nicht nur entgegen dem Andruck an der Zahnoberfläche, sondern in zumindest eingeschränktem Umfang auch quer bzw. in jeder beliebigen Richtung vorgesehen sein.

Mit Vorteil weist das Federteil ein größeres Trägheitsmoment als der restliche Querschnitt des Halses auf und erstreckt sich im wesentlichen über die gesamte Länge des Halses des Bürstenkörpers.

Die erfindungsgemäße Ausbildung gibt die Möglichkeit, daß die Federkraft des Federteils durch Auswahl des Kunststoffs und/oder der Füllstoffe und/oder seines Querschnitts einstellbar ist. Diese Einstellung der Federkraft ist in weiten Bereichen möglich. So wird man für Kinderzahnbürsten eine kleinere Federkraft als bei Zahnbürsten für Erwachsene wählen. Gegenüber allen bekannten Ausführungen ergibt sich eine Material- und somit eine Kostenersparnis. Außerdem kann der Hals extrem schlank mit weichen Übergängen zum Stiel und Kopf ausgebildet sein.

In weiterhin bevorzugter Ausführung weist das Federteil quer zu seiner Erstreckung Vorsprünge auf. Diese Vorsprünge können zunächst als einfaches Hilfsmittel zur Positionierung in der Spritzgießform und zur Positionshaltung während des Abspritzens dienen. Ferner wird damit das Federteil in der es umgebenden Kunststoffmasse "zentriert" und verankert.

Die Erfindung gibt insbesondere die Möglichkeit, daß die Vorsprünge bis an die Oberfläche des das Federteil umhüllenden Kunststoffs reichen. Damit ist wiederum in fertigungstechnischer Hinsicht der Vorteil verknüpft, daß das Federteil unmittelbar an der Formwandung positioniert werden kann und nicht irgendwelche Hilfsmittel zum Positionieren in den Formraum hineinreichen müssen. An der Oberfläche stören diese Vorsprünge nicht, da auch sie aus Kunststoff bestehen.

Die Vorsprünge können im Gegenteil in dem Bereich, in dem sie auf der Sichtseite erscheinen, eine weitere Funktion erfüllen, nämlich als Informationsträger, z.B. für Herstellermarken, Werbeaufschriften, Verwendungshinweise oder dergleichen dienen oder als solche geformt sein.

In weiterer vorteilhafter Ausführung kann vorgesehen sein, daß das Federteil mit einer seiner langgestreckten Oberflächen an der Oberfläche des es umhüllenden Kunststoffs liegt.

Damit wird zugleich eine großflächige Auflage des Federteils in der Spritzgießform für den Stiel und den Kopf der Zahnbürste geschaffen. Insbesondere kann das Federteil mit dieser langgestreckten Oberfläche einerseits und den an der gegenüberliegenden Seite angeordneten Vorsprüngen zwischen den beiden Werkzeugen der Spritzgießform eingespannt und damit exakt positioniert werden. Schließlich kann durch entsprechende Einfärbung des Federteils dessen Federfunktion optisch angezeigt werden.

In weiterhin vorteilhafter Ausgestaltung ist vorgesehen, daß im Griffbereich des Stiels wenigstens ein Griffelement aus einem Kunststoff mit einem höheren Reibungskoeffizienten als der des umgebenden Kunststoffs eingebettet ist.

Der Stiel und Kopf einer Kunststoff-Zahnbürste bestehen aus optischen und hygienischen Gründen in der Regel aus einem Kunststoff mit glatter, gegebenenfalls glänzender Oberfläche, so daß der Stiel nicht sonderlich griffig bzw. grifffest ist. Dieser Nachteil wird durch die Federeigenschaft im Bereich des Bürstenhalses noch erhöht, da der Kopf gegenüber dem Stiel Relativbewegungen ausführt und der Halt der Finger am Stiel dadurch vermindert wird; die Finger können leicht abrutschen. Dem wird durch die Griffelemente mit erhöhtem Reibungskoeffizienten entgegengewirkt. Sie gewähren den Fingern einen festen Halt am Stiel, so daß die Zahnbürste bei Benutzung nicht verrutschen kann.

Vorzugsweise besteht das Griffelement aus einem Elastomer, der von Hause aus einen höheren Reibungskoeffizienten als die für den Stiel und den Kopf üblicherweise verwendeten Thermoplaste aufweist.

Die Griffigkeit kann noch dadurch erhöht werden, daß je ein Griffelement an der Oberseite und der Unterseite des Stiels vorgesehen ist, so daß auch der an der Unterseite angreifende Daumen einen festen Halt erhält.

Eine weitere Steigerung der Griffigkeit ergibt sich dadurch, daß die Griffelemente an ihrer freiliegenden Oberfläche mit einem reibungserhöhenden Profil versehen sind, das beispielsweise der Form der Fingerkuppen folgt.

Die beiden Griffelemente an der Ober- und Unterseite berühren sich vorzugsweise im Inneren des Stiels, was ihre Einlage in die Spritzgießform erleichtert. Sie können aber auch einstückig ineinander übergehen. In Verbindung mit der Ausbildung der Griffelemente aus einem Elastomer ergibt sich damit eine besonders elastische Griffläche.

Schließlich ist vorgesehen, daß das Federteil und die Griffelemente als Formkörper vorgeformt und mit dem den Stiel und den Kopf bildenden Kunststoff umspritzt sind.

Statt einer getrennten Fertigung der Teile und dem nachträglichen Einbetten oder Umspritzen, kann auch vorgesehen sein, daß der Bürstenkörper, das Federteil und die Griffelemente im Mehrkomponenten-Spritzgießverfahren hergestellt sind.

Nachstehend ist die Erfindung anhand von in der Zeichnung wiedergegebenen Ausführungsbeispielen beschrieben. In der Zeichnung zeigen:
- Figur 1: einen Längsschnitt einer Zahnbürste ohne Borsten;
- Figur 2: einen vergrößerten Schnitt im Bereich "X" der Figur 1,
- Figur 3: eine Draufsicht auf die Schnittdarstellung gemäß Figur 2 von unten;
- Figur 4: einen der Figur 1 entsprechenden, jedoch abgebrochenen Schnitt einer anderen Ausführungsform;
- Figur 5: einen Längsschnitt einer weiteren Ausführungsform;
- Figur 6: einen vergrößerten Ausschnitt der Figur 5 und
- Figur 7: einen Schnitt VII-VII gemäß Figur 6.

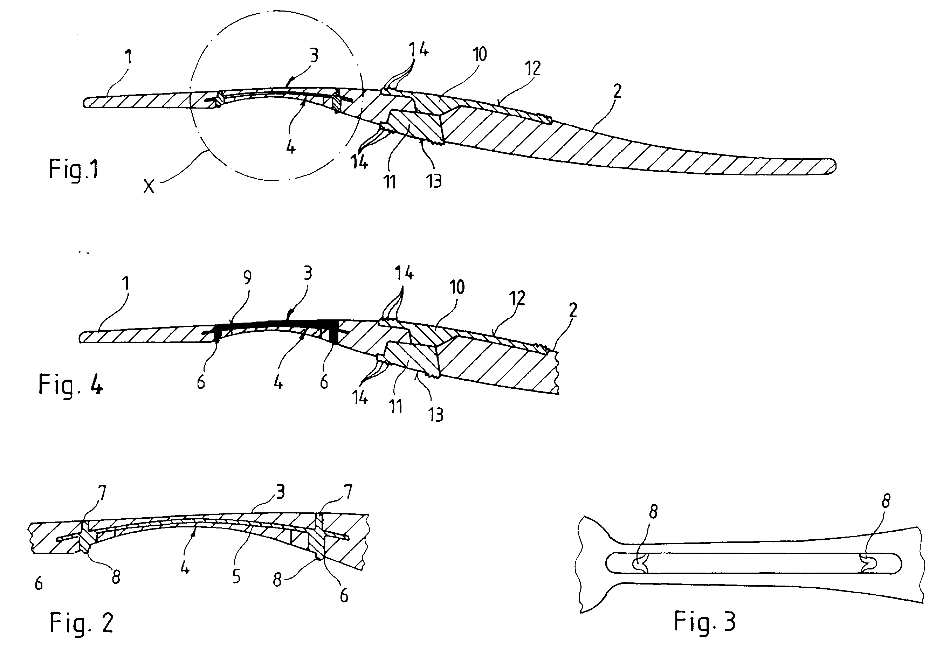

Die Zahnbürste gemäß Figur 1 besteht aus einem Bürstenkopf 1 mit einem nicht gezeigten Borstenbesatz und einem langgestreckten Stiel 2, die über einen schlanken Übergangsbereich, dem Hals 3, miteinander verbunden sind.

In dem eingeschnürten Übergangsbereich vom Bürstenkopf 1 zum Stiel 2 ist ein Federteil 4 eingebettet. Beispielsweise ist die gesamte Zahnbürste im Wege des Spritzgießens hergestellt und das Federteil 4 dabei umspritzt worden. Das Federteil 4 ist folglich, wie insbesondere aus Figur 2 zu ersehen ist, allseitig von Kunststoff umgeben, so daß die Zahnbürste ein einheitliches Äußeres bietet.

Das Federteil 4 weist einen höheren Elastizitätsmodul als der umgebende Kunststoff des Bürstenkörpers auf, besteht aber gleichfalls überwiegend aus Kunststoff, vorzugsweise aus glasfaserverstärktem Kunststoff, und kann ähnlich einer Blattfeder oder einem Runddraht ausgebildet sein, aber auch einen ovalen oder polygonalen Querschnitt aufweisen. Dadurch wird dem Hals 3 der Zahnbürste ein Federvermögen etwa senkrecht zur Längserstreckung des Bürstenkörpers verliehen, jedoch kann durch entsprechende Querschnittsform ein mehr oder weniger ausgeprägtes Federvermögen auch in anderen Richtungen verwirklicht sein.

Bei dem in Figur 1 gezeigten Ausführungsbeispiel weist das Federteil 4 ein flaches blattförmiges Hauptteil 5 auf, das im Bereich seiner Enden mit quer zu seiner Erstreckung verlaufenden Vorsprüngen 6 und 7 versehen ist. Diese Vorsprünge können zum Positionieren innerhalb der Spritzgießform dienen. Sie ragen vorzugsweise bis an die Oberfläche des Halses 3 und können auf diese Weise, wie in Figur 3 gezeigt, zusätzlich als Träger für Informationen 8 dienen. Diese Informationen können bereits anläßlich der Herstellung des Federteils 4 durch entsprechende Prägungen im Werkzeug erzeugt werden.

Das Ausführungsbeispiel gemäß Figur 4 unterscheidet sich von dem gemäß Figur 1 dadurch, daß das Federteil 4 mit der in seiner Längserstreckung verlaufenden Oberfläche 9 in der oberseitigen Oberfläche des Halses 3 zwischen Kopf 1 und Stiel 2 liegt. Entsprechend flächig kann das vorgeformte Federteil 4 in der Spritzgießform zum Umspritzen mit dem den Kopf 1 und den Stiel 2 bildenden Kunststoff abgestützt werden. Durch geeignete Farbunterschiede kann die Funktion des Federteils dem Benutzer optisch signalisiert werden. Er kann folglich die erfindungsgemäß ausgebildete Zahnbürste von einer anderen Zahnbürste unterscheiden.

Der Stiel 2 weist in seinem verdickten Griffbereich in den Kunststoff eingebettete Griffelemente 10, 11 auf, wobei das obere Griffelement 10 eine relativ große Grifffläche 12, das untere Griffelement 11 eine etwas kleinere Griffläche 13 bietet. Die Griffelemente bestehend aus einem Elastomer und können an ihrer freien Oberfläche zusätzlich mit einem reibungserhöhenden Profil, z.B. in Form von Rillen 14 versehen sein, die vorzugsweise in geschlossenen, konzentrischen Ovalen verlaufen und damit der Form der Fingerkuppe angepaßt sind. Die Griffelemente 10 und 11 stützen sich im Inneren des Stiels 2 aneinander ab, so daß auch sie einwandfrei in der Spritzgießform für das Umspritzen mit dem Kunststoff von Kopf 1 und Stiel 2 abgestützt werden können.

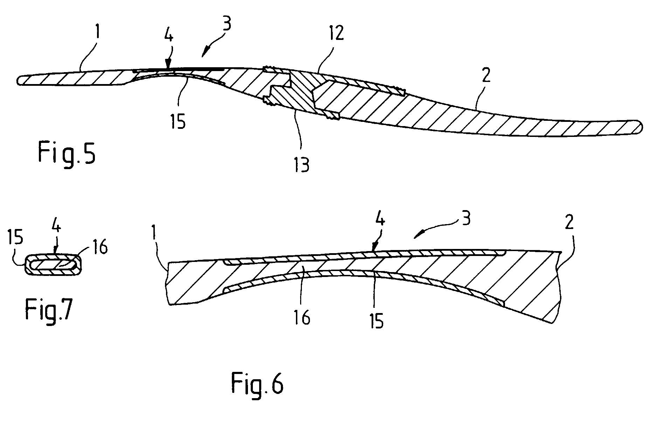

Bei dem Ausführungsbeispiel nach Figur 5 ist das Federteil 4 als eine Art Hülse 15 ausgebildet, die im Übergangsbereich 16 den Kunststoff des Bürstenkörpers umhüllt. Die Herstellung erfolgt vorzugsweise im Zweikomponenten- Spritzgießverfahren, indem in einer Spritzgießform zunächst der Bürstenkörper aus Kopf 1, Stiel 2 und Übergangsbereich 16 gespritzt. Anschließend wird der Übergangsbereich 16 in der gleichen Spritzgießform mit dem das Federteil 4 bildenden Kunststoff umspritzt und auf diese Weise zugleich der Hals 3 ausgebildet. Das Federteil 4 weist wiederum einen höheren Elastizitätsmodul auf als der von ihm umhüllte Kunststoff im Übergangsbereich 16 des Bürstenkörpers. Ebenso sind die Griffelemente 12, 13, im Zweikomponenten-Spritzgießverfahren nachträglich eingespritzt, so daß sie einstückig ausgebildet sind.

Bei allen Ausführungsformen erstreckt sich das Federteil 4 über den gesamten Übergangsbereich 3, 16 bis in den Kopf 1 bzw. den Stiel 2, so daß auch an den Übergängen eine ausreichende Stabilität gegeben ist.

## Patentansprüche

1. Zahnbürste mit einem einstückig aus Kunststoff gespritzten Bürstenkörper, bestehend aus einem im wesentlichen, starren, die Borsten aufnehmenden Kopf, einem im wesentlichen starren Stiel und einem diese verbindenden verjüngten Hals, der einen federnden Bereich aus Kunststoff aufweist, dadurch gekennzeichnet, daß der federnde Bereich als Federteil (4) ausgebildet ist, das zumindest überwiegend aus einem höherwertigen Kunststoff mit einem höheren Elastizitätsmodul als der Bürstenkörper besteht und in dem Kunststoff des Bürstenkörpers unter Bildung des Halses (3) zumindest teilweise eingebettet ist.

2. Zahnbürste mit einem einstückig aus Kunststoff gespritzten Bürstenkörper, bestehend aus einem im wesentlichen starren, die Borsten aufnehmenden Kopf, einem im wesentlichen starren Stiel und einem diese verbindenden verjüngten Hals, der einen federnden Bereich aus Kunststoff aufweist, dadurch gekennzeichnet, daß der federnde Bereich als Federteil (4) zumindest überwiegend aus einem höherwertigen Kunststoff mit einem höheren Elastizitätsmodul als der Bürstenkörper besteht und den Kunststoff des Bürstenkörpers unter Bildung des Halses (3) zumindest teilweise umhüllt.

3. Zahnbürste nach Anspruch 1 oder 2, dadurch gekennzeichnet, daß das Federteil (4) ausschließlich aus Kunststoff besteht.

4. Zahnbürste nach Anspruch 1 oder 2, dadurch gekennzeichnet, daß das Federteil (4) aus einem gefüllten Kunststoff besteht.

5. Zahnbürste nach Anspruch 4, dadurch gekennzeichnet, daß die Füllstoffe mit einem Anteil von 1 bis 30 Vol.-% vorgesehen sind.

6. Zahnbürste nach Anspruch 4 oder 5, dadurch gekennzeichnet, daß das Federteil (4) aus dem gleichen Kunststoff wie der Bürstenkörper besteht.

7. Zahnbürste nach einem der Ansprüche 4 bis 6, dadurch gekennzeichnet, daß das Federteil (7) aus faserverstärktem Kunststoff besteht.

8. Zahnbürste nach Anspruch 7, dadurch gekennzeichnet, daß das Federteil (4) aus einem glasfaserverstärkten Kunststoff besteht.

9. Zahnbürste nach Anspruch 1 bis 8, dadurch gekennzeichnet, daß das Federteil (4) einen flachen, polygonalen, runden oder ovalen Querschnitt aufweist.

10. Zahnbürste nach einem der Ansprüche 1 bis 8, dadurch gekennzeichnet, daß das Federteil (4) einen T-, I- oder U-Querschnitt aufweist.

11. Zahnbürste nach einem der Ansprüche 1 bis 10, dadurch gekennzeichnet, daß das Federteil (4) ein größeres Trägheitsmoment als der restliche Querschnitt des Halses (3) aufweist.

12. Zahnbürste nach einem der Ansprüche 1 bis 11, dadurch gekennzeichnet, daß sich das Federteil (4) im wesentlichen über die gesamte Länge des verjüngten Halses (3) erstreckt.

13. Zahnbürste nach einem der Ansprüche 1 bis 12, dadurch gekennzeichnet, daß die Federkraft des Federteils (4) durch Auswahl des Kunststoffs und/oder der Füllstoffe und/oder seines Querschnitts einstellbar ist.

14. Zahnbürste nach einem der Ansprüche 1 bis 13, dadurch gekennzeichnet, daß das Federteil (4) quer zu seiner Erstreckung Vorsprünge (6, 7) aufweist.

15. Zahnbürste nach Anspruch 14, dadurch gekennzeichnet, daß die Vorsprünge (6, 7) bis an die Oberfläche des das Federteil (4) umhüllenden Kunststoffs reichen.

16. Zahnbürste nach Anspruch 15, dadurch gekennzeichnet, daß die Vorsprünge (6, 7) als Informationsträger (8) dienen.

17. Zahnbürste nach Anspruche 16, dadurch gekennzeichnet, daß die Vorsprünge (6, 7) zumindest in ihrem in der Oberfläche des sie umhüllenden Kunststoffs liegenden Bereich als Informationsträger (8) geformt sind.

18. Zahnbürste nach Anspruch 14, dadurch gekennzeichnet, daß die Vorsprünge (6, 7) als Verankerungsmittel für das Federteil wirken.

19. Zahnbürste nach einem der Ansprüche 1 bis 18, dadurch gekennzeichnet, daß das Federteil (4) mit einer seiner langgestreckten Oberflächen (9) in der Oberfläche des umhüllenden Kunststoffs liegt.

20. Zahnbürste nach einem der Ansprüche 1 bis 19, dadurch gekennzeichnet, daß im Griffbereich des Stiels (2) wenigstens ein Griffelement (10, 11) aus einem Kunststoff mit einem höheren Reibungskoeffizienten und/oder höherer Elastizität als der es umgebende Kunststoff eingebettet ist.

21. Zahnbürste nach einem der Ansprüche 1 bis 20, dadurch gekennzeichnet, daß das Griffelement (10, 11) aus einem Elastomer besteht.

22. Zahnbürste nach Anspruch 21 oder 22, dadurch gekennzeichnet, daß je ein Griffelement (10, 11) an der Oberseite und der Unterseite des Stiels (2) vorgesehen ist.

23. Zahnbürste nach einem der Ansprüche 21 bis 23, dadurch gekennzeichnet, daß die Griffelemente (10, 11) an ihrer frei liegenden Oberfläche (12, 13) mit einem reibungserhöhenden Profil (14) versehen sind.

24. Zahnbürste nach einem der Ansprüche 21 bis 23, dadurch gekennzeichnet, daß die beiden Griffelemente (10, 11) sich im Inneren des Stiels (2) berühren oder einstückig ineinander übergehen.

25. Zahnbrüste nach einem der Ansprüche 1 bis 24, dadurch gekennzeichnet, daß das Federteil (4) und/oder die Griffelemente (10, 11) als Formkörper vorgeformt und mit dem den Bürstenkörper bildenden Kunststoff umspritzt sind.

26. Zahnbürste nach einem der Ansprüche 1 bis 24, dadurch gekennzeichnet, daß der Bürstenkörper, das Federteil (4) und die Griffelemente (10, 11) im Mehrkomponenten-Spritzgießverfahren hergestellt sind.

## Claims

1. Toothbrush with a brush body injection moulded in one piece from plastic, comprising a substantially rigid head receiving the bristles, a substantially rigid handle and a tapered neck linking the same, which has a resilient plastic area, characterized in that the resilient area is constructed as a spring part (4), which at least preponderantly comprises a higher quality plastic with a higher modulus of elasticity than the brush body and is at least partly embedded in the plastic of the brush body, accompanied by the formation of the neck (3).

2. Toothbrush with a brush body injection moulded from plastic in one piece, comprising a substantially rigid, bristle-receiving head, a substantially rigid handle and a tapered neck connecting the same and which has a resilient plastic area, characterized in that the resilient area as the spring part (4) at least preponderantly comprises a higher quality plastic with a higher modulus of elasticity than the brush body and at least partly envelops the plastic of the brush body, accompanied by the formation of the neck (3).

3. Toothbrush according to claim 1 or 2, characterized in that the spring part (4) is made exclusively from plastic.

4. Toothbrush according to claim 1 or 2, characterized in that the spring part (4) comprises a filled plastic.

5. Toothbrush according to claim 4, characterized in that the fillers are present in a proportion of 1 to 30 vol.%.

6. Toothbrush according to claim 4 or 5, characterized in that the spring part (4) is made from the same plastic as the brush body.

7. Toothbrush according to one of the claims 4 to 6, characterized in that the spring part (4) is made from fibre-reinforced plastic.

8. Toothbrush according to claim 7, characterized in that the spring part (4) is made from glass fibre-reinforced plastic.

9. Toothbrush according to claims 1 to 8, characterized in that the spring part (4) has a flat, polygonal, round or oval cross-section.

10. Toothbrush according to one of the claims 1 to 8, characterized in that the spring part (4) has a T, I or U cross-section.

11. Toothbrush according to one of the claims 1 to 10, characterized in that the spring part (4) has a higher moment of inertia than the remaining cross-section of the neck (3).

12. Toothbrush according to one of the claims 1 to 11, characterized in that the spring part (4) extends essentially over the entire length of the tapered neck (3).

13. Toothbrush according to one of the claims 1 to 12, characterized in that the spring tension of the spring part (4) is adjustable through the choice of the plastic and/or the fillers and/or its cross-section.

14. Toothbrush according to one of the claims 1 to 13, characterized in that the spring part (4) has projections (6, 7) transversely to its extension.

15. Toothbrush according to claim 14, characterized in that the projections (6, 7) extend to the surface of the plastic enveloping the spring part (4).

16. Toothbrush according to claim 15, characterized in that the projections (6, 7) serve as information carriers (8).

17. Toothbrush according to claim 16, characterized in that at least in their area located in the surface of the plastic enveloping them, the projections (6, 7) are shaped as information carriers (8).

18. Toothbrush according to claim 14, characterized in that the projections (6, 7) serve as anchoring means for the spring part.

19. Toothbrush according to one of the claims 1 to 18, characterized in that the elongated surfaces (9) of the spring part (4) are located in the surface of the enveloping plastic.

20. Toothbrush according to one of the claims 1 to 19, characterized in that in the gripping area of the handle (2) is embedded at least one gripping element (10, 11) made from a plastic having a higher coefficient of friction and/or higher elasticity than the plastic surrounding it.

21. Toothbrush according to one of the claims 1 to 20, characterized in that the gripping element (10, 11) comprises an elastomer.

22. Toothbrush according to claim 21 or 22, characterized in that in each case a gripping element (10, 11) is provided on the top and bottom of the handle (2).

23. Toothbrush according to one of the claims 21 to 23, characterized in that on their freely exposed surface (12, 13), the gripping elements (10, 11) are provided with a friction-increasing profile (14).

24. Toothbrush according to one of the claims 21 to 23, characterized in that the two gripping elements (10, 11) are in contact or pass in one piece into one another in the interior of the handle (2).

25. Toothbrush according to one of the claims 1 to 24, characterized in that the spring part (4) and/or the gripping elements (10, 11) are preshaped as mouldings and the plastic forming the brush body is moulded round them.

26. Toothbrush according to one of the claims 1 to 24, characterized in that the brush body, the spring part (4) and the gripping elements (10, 11) are manufactured in the multicomponent injection moulding process.

## Revendications

1. Brosse à dents comprenant un corps de brosse moulé d'une seule pièce par injection d'une matière synthétique, comportant une tête de réception des poils sensiblement rigide, un manche sensiblement rigide et un col rétréci les reliant entre eux, présentant une zone élastique en matière synthétique, caractérisée en ce que la zone élastique est conformée en pièce élastique (4), composée au moins majoritairement d'une matière synthétique de qualité supérieure à module d'élasticité plus important que celui du corps de brosse, et en ce qu'elle est au moins partiellement noyée dans la matière synthétique du corps de brosse en formant un col (3).

2. Brosse à dents comprenant un corps de brosse moulé d'une seule pièce par injection d'une matière synthétique, comportant une tête de réception des poils sensiblement rigide, un manche sensiblement rigide et un col rétréci les reliant entre eux, présentant une zone élastique en matière synthétique, caractérisée en ce que la zone élastique conformée en pièce élastique (4) est composée au moins majoritairement d'une matière synthétique de qualité supérieure à module d'élasticité plus important que celui du corps de brosse, et en ce qu'elle enveloppe au moins partiellement la matière synthétique du corps de brosse en formant un col (3).

3. Brosse à dents selon la revendication 1 ou 2, caractérisée en ce que la pièce élastique (4) est réalisée exclusivement dans de la matière synthétique.

4. Brosse à dents selon la revendication 1 ou 2, caractérisée en ce que la pièce élastique (4) est réalisée dans une matière synthétique contenant une charge.

5. Brosse à dents selon la revendication 4, caractérisée en ce que les matières de charge sont prévues dans une proportion de 1 à 30 % en volume.

6. Brosse à dents selon la revendication 4 ou 5, caractérisée en ce que la pièce élastique (4) est réalisée dans la même matière synthétique que le corps de brosse.

7. Brosse à dents selon l'une quelconque des revendications 4 à 6, caractérisée en ce que la pièce élastique (4) est réalisée dans une matière synthétique renforcée par des fibres.

8. Brosse à dents selon la revendication 7, caractérisée en ce que la pièce élastique (4) est réalisée dans une matière synthétique renforcée par des fibres de verre.

9. Brosse à dents selon la revendication 1 à 8, caractérisée en ce que la pièce élastique (4) présente une section plate, polygonale, ronde ou ovale.

10. Brosse à dents selon l'une quelconque des revendications 1 à 8, caractérisée en ce que la pièce élastique (4) présente une section en T, en I ou en U.

11. Brosse à dents selon l'une quelconque des revendications 1 à 10, caractérisée en ce que la pièce élastique (4) présente un moment d'inertie supérieur à celui du reste du col (3).

12. Brosse à dents selon l'une quelconque des revendications 1 à 11, caractérisée en ce que la pièce élastique (4) s'étend sensiblement sur l'ensemble de la longueur du col rétréci (3).

13. Brosse à dents selon l'une quelconque des revendications 1 à 12, caractérisée en ce que la force élastique de la pièce élastique (4) peut être modulée par le choix de la matière synthétique et/ou des matières de charge et/ou de sa section.

14. Brosse à dents selon l'une quelconque des revendications 1 à 13, caractérisée en ce que la pièce élastique (4) présente des saillies (6,7) transversalement à sa direction d'extension.

15. Brosse à dents selon la revendication 14, caractérisée en ce que les saillies (6,7) s'étendent jusqu'à la surface de la matière synthétique enveloppant la pièce élastique (4).

16. Brosse à dents selon la revendication 15, caractérisée en ce que les saillies (6,7) servent de supports d'informations (8).

17. Brosse à dents selon la revendication 16, caractérisée en ce que les saillies (6,7) sont conformées en supports d'informations (8) au moins dans leur zone située à la surface de la matière synthétique les entourant.

18. Brosse à dents selon la revendication 14, caractérisée en ce que les saillies (6,7) servent de moyen d'ancrage pour la pièce élastique.

19. Brosse à dents selon l'une quelconque des revendications 1 à 18, caractérisée en ce que la pièce élastique (4) est située par une de ses surfaces allongées (9) à la surface de la matière synthétique enveloppante.

20. Brosse à dents selon l'une quelconque des revendications 1 à 19, caractérisée en ce que dans la zone de préhension du manche (2) est noyé au moins un élément de préhension (10,11) réalisé dans une matière synthétique à coefficient de frottement supérieur et/ou à élasticité supérieure à ceux de la matière synthétique environnante.

21. Brosse à dents selon l'une quelconque des revendications 1 à 20, caractérisée en ce que l'élément de préhension (10,11) est réalisé dans un élastomère.

22. Brosse à dents selon la revendication 21 ou 22, caractérisée en ce qu'à la face supérieure et à la face inférieure du manche (2) est prévu à chaque fois un élément de préhension (10,11).

23. Brosse à dents selon l'une quelconque des revendications 21 à 23, caractérisée en ce que les éléments de préhension (10,11) sont pourvus à leur surface libre (12,13) d'un profil (14) à frottement augmenté.

24. Brosse à dents selon l'une quelconque des revendications 21 à 23, caractérisée en ce que les deux éléments de préhension (10,11) se touchent à l'intérieur du manche (2) ou se fondent l'un dans l'autre en une seule pièce.

25. Brosse à dents selon l'une quelconque des revendications 1 à 24, caractérisée en ce que la pièce élastique (4) et/ou les éléments de préhension (10,11) sont préformés en corps de remplissage et encastrés par injection dans la matière synthétique constituant le corps de brosse.

26. Brosse à dents selon l'une quelconque des revendications 1 à 24, caractérisée en ce que le corps de brosse, la pièce élastique (4) et les éléments de préhension (10,11) sont fabriqués par un procédé de moulage par injection à plusieurs composants.
